# FASCICULE DE BREVET EUROPEEN

(11) **EP 2 691 449 B1**
(45) Date de publication et mention de la délivrance du brevet: **01.08.2018**
(21) Numéro de dépôt: 12714796.5
(22) Date de dépôt: 16.03.2012
(51) Int. Cl.: C08J 9/32, F16L 59/14

(54) **MATERIAU D'ISOLATION THERMIQUE ET/OU DE FLOTTABILITE RIGIDE POUR CONDUITE SOUS-MARINE**
STARRES MATERIAL FÜR WÄRMEISOLIERUNG UND/ODER AUFTRIEB FÜR EINE UNTERWASSERROHRLEITUNG
RIGID MATERIAL FOR HEAT-INSULATION AND/OR BUOYANCY FOR AN UNDERWATER PIPE

(30) Priorité: 29.03.2011 FR 1152574
(43) Date de publication de la demande: 05.02.2014
(73) Titulaire: Saipem SA, 78180 Montigny-le-Bretonneux (FR)
(72) Inventeur: PIONETTI, François Régis, 50450 La Baleine (FR); SZYSZKA, Damien, 92130 Issy Les Moulineaux (FR); CHKIR, Rami, 92800 Puteaux (FR)
(74) Mandataire: Domange, Maxime
(86) Numéro de dépôt international: PCT/FR2012/050553
(87) Numéro de publication internationale: WO 2012/131214

(56) Documents cités:
- WO-A1-02/34809
- WO-A1-2010/065436
- FR-A2- 2 587 934
- "Glass Bubbles For Buoyancy and Thermal Insulation", , 1 January 2010 (2010-01-01), XP055228203, Retrieved from the Internet: URL:http://multimedia.3m.com/mws/media/631 377O/3mtm-glass-bubbles-for-buoyancy-and-t hermal-insulation.pdf [retrieved on 2015-11-12]

## Description

La présente invention concerne un matériau d'isolation thermique et/ou de flottabilité rigide de conduite sous-marine et d'accessoires, tels des vannes et des régulateurs de débit ou de pression, notamment de conduite sous-marine véhiculant des fluides chauds ou froids, de préférence une conduite sous-marine destinée aux grandes profondeurs, ou encore des liaisons fond-surface entre des têtes de puits sous-marines et un navire de stockage et de traitement ancré en surface.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent atteindre 2000 m à 3000 m, voire plus.

La présente invention concerne en particulier les conduites sous-marines isolées, installées sur les champs pétroliers par très grandes profondeurs, ou encore les conduites de liaison fond-surface en suspension entre le fond de la mer et un navire de surface ancré sur ledit champ pétrolier, ainsi que tous types d'accessoires, tels des vannes, des régulateurs de débit ou de pression, etc.

Le pétrole brut sort en général des têtes de puits à des températures de 45 à 75°C, voire plus, et lesdites têtes de puits sont souvent éloignées horizontalement de plusieurs kilomètres du support de surface qui reçoit et traite le pétrole brut, tandis que l'eau est à environ de 3-5°C. De plus, la profondeur d'eau atteint et dépasse 2000 à 3000m, et l'on cherche à garder le pétrole brut jusqu'à son arrivée en surface, à une température supérieure à 30-35°C, de manière à éviter la formation de bouchons de paraffine ou d'hydrates de gaz, qui bloqueraient la production. Ceci requiert donc une isolation thermique performante continue de la conduite de liaison fond-surface véhiculant le pétrole brut.

Ainsi, on a développé de multiples types de conduites isolées et en particulier des conduites de type "Pipe In Pipe" ou PiP, c'est à dire "conduite dans une conduite", dans laquelle une conduite interne véhicule le fluide et une conduite externe coaxiale à la précédente, appelée aussi "enveloppe externe", est en contact avec le milieu ambiant, c'est-à-dire l'eau. L'espace annulaire entre les deux conduites peut être rempli d'un matériau isolant ou encore être vidé de tout gaz.

Ces systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10 m de profondeur, la pression à laquelle doit résister la conduite est alors d'environ 10 MPa, soit environ 100 bars pour 1000 m de profondeur et d'environ 30 MPa, soit environ 300 bars pour 3000 m.

On connaît des moyens d'isolation des conduites externes résistant à des pressions hydrostatiques élevées et donc aptes à être utilisés à des profondeurs d'immersion élevées, constitués par des revêtements matériaux polymères massifs quasi incompressibles à base de polyuréthane, polyéthylène, polypropylène etc. qui se présentent le cas échéant sous forme de manchon tubulaire massif. Mais ces matériaux présentent une conductivité thermique et des propriétés d'isolation thermiques assez moyennes, insuffisantes pour éviter les inconvénients de formation de bouchons mentionnés ci-dessus en cas d'arrêt de production pour les conduites sous-marines véhiculant des hydrocarbures.

On connaît aussi des matériaux isolants rigides présentant de plus une flottabilité intéressante, constitués de matériaux synthétiques comportant des micro-sphères (de diamètre inférieur à 0,1 mm) ou des macro-sphères (de diamètre de 1 à 10 mm) creuses contenant un gaz et résistantes à la pression extérieure, noyées dans des liants tels une résine époxy ou résine polyuréthanne, connues de l'homme de l'art sous le nom de mousse syntactique. Ces matériaux isolants de mousses syntactiques sont mis en oeuvre principalement pour l'isolation de conduites sous-marine à grande profondeur, de type riser ou tour multi riser, comme décrits par exemple dans WO 00/29276, WO 2006/136960, WO 2009/138609 ou encore WO 2010/097528. Ces mousses sont extrêmement coûteuses à fabriquer lorsqu'elles sont destinées à des profondeurs supérieures à 1000 m, c'est-à-dire lorsqu'elles doivent résister à des pressions de l'ordre de 100 bars, c'est à dire 10 MPa, car les microsphères nécessaires doivent être triées et testées pour résister à ces pressions. De plus, le processus de fabrication est très délicat lorsque l'on cherche à fabriquer des éléments de forte épaisseur, car la réticulation des produits chimiques est une réaction fortement exothermique. En effet, le principal problème est de ralentir la réaction physico-chimique et simultanément d'évacuer les calories produites, de manière à éviter que la réaction ne s'emballe, risquant ainsi de cuire, voire de brûler le matériau dans la masse, ce qui conduit en général à un matériau impropre à l'usage auquel on le destinait.

De plus, en général les principaux défauts de fabrication rencontrés résultent d'un manque de contrôle du processus de réticulation, conduisant à des dégradations internes de la matrice polymère, lesdits défauts n'étant pas toujours décelables avant l'installation et la mise en route des conduites sous-marines. Il en résulte alors, au bout de quelques mois de fonctionnement à haute température, notamment pour le transfert de pétrole à température de 20 à 90°C et à très forte pression extérieure (10 MPa par tranche de 1 000 m d'eau), des fissurations de la matrice en polymère et des dégradation des micro-sphères, ce qui conduit non seulement à des pertes d'isolation importantes et des pertes de flottabilité, mais surtout à la création de points froids, ces derniers étant particulièrement redoutés en cas d'arrêt de production, car alors le pétrole brut se met très rapidement à figer en formant des bouchons très localisés de paraffine et d'hydrates de gaz qu'il est quasi impossible à résorber simplement.

Ces matériaux isolants rigides de mousses syntactiques à hautes performances sont utilisés pour des isolations de conduites en longueur courante, tant pour les conduites reposant sur le fond de la mer que pour les conduites de liaison fond-surface. En revanche, ces matériaux isolants rigides ne sont pas aisés à utiliser pour les éléments singuliers de jonction, appelés "spool piece", ou pièces de raccordement, ou encore conduites de jonction coudées, car ces éléments de conduites présentent en général des formes compliquées, comprenant une pluralité de courbures ou coudes, comme décrit dans WO 2010/063922, et doivent être fabriquées après la pose des conduites sous-marines et l'installation des liaisons fond-surface.

Par ailleurs, on connaît des matériaux isolants à propriété d'isolation thermique supérieure, c'est-à-dire à plus faible conductivité thermique, doublée de propriétés de changement de phases. Des matériaux isolants à changement de phase (PCM) sont mis en oeuvre notamment dans WO 00/40886 et WO 2004/003424, mais ces matériaux isolants PCM qui peuvent adopter un état liquide requièrent un confinement dans un matériau absorbant, comme décrit dans WO 00/40886 ou un confinement dans des poches, comme décrit dans WO 2004/003424.

Les matériaux à changement de phase (PCM) se comportent comme des accumulateurs de chaleur. Ils restituent cette énergie au cours de leur solidification par cristallisation ou absorbent cette énergie en cours de leur fusion et, ce, de manière réversible. Ces matériaux peuvent donc permettent d'augmenter la durée des arrêts de production sans risquer le colmatage des conduites par refroidissement prématuré de leur contenu. Toutefois, ces matériaux à changement de phase présentent l'inconvénient que leur état liquide visqueux favorise les pertes thermiques par convexion. Un autre inconvénient de ces matériaux isolants à changement de phase est qu'ils induisent une nécessaire variation de volume du matériau à l'occasion de ces changements de phase, ce qui a des conséquences sur leur enveloppe de confinement, laquelle doit être capable d'accepter ces variations de volume.

Ces revêtements isolants thermiques confinés sont revêtus d'une enveloppe externe tubulaire continue semi-rigide. Mais dans la technique antérieure, les réalisations décrites sont limitées à la fabrication de conduites rectilignes et ne peuvent pas être aisément adaptées, non plus, pour fabriquer des conduites coudées telles que décrites ci-dessus. Ces réalisations ne sont pas aisément adaptables pour la réalisation d'isolation thermique de conduites de jonction coudées de par la structure des enveloppes externes, qui telles que décrites ne peuvent pas être déformées de manière concentrique par rapport à la conduite interne et ne permettraient pas d'obtenir une épaisseur sensiblement constante de matériau isolant, notamment dans les zones coudées.

D'autres matériaux isolants se présentant sous forme de gel ont été décrits, notamment dans les brevets FR 2 809 115, FR 2 820 426 et FR 2 820 752, de la demanderesse et WO 02/34809. Plus particulièrement, ces gels isolants sont constitués d'un complexe comprenant un premier composé présentant des propriétés d'isolation thermique supérieures, ainsi qu'un caractère plastifiant, que l'on mélange avec un second composé ayant un effet structurant, notamment par réticulation, tel qu'un composé de polyuréthane, ledit mélange formant in fine, après réticulation du second composé, un gel isolant constitué d'une matrice de dit deuxième composé confinant ledit premier composé isolant, le gel isolant final obtenu réduisant radicalement les phénomènes de convexion dans le cas où le premier composé est un matériau à changement de phase notamment.

En effet, ledit premier composé peut être lui-même un composé à changement de phase comme la paraffine, d'autres composés de la famille des alcanes, tels que les cires, les bitumes, les goudrons, les alcools gras, les glycols, et plus particulièrement encore tout composé dont la température de fusion est comprise entre la température t₂ des effluents chauds circulant la conduite interne et température t₃ du milieu environnant de la conduite en opération, soit en fait, en général une température de fusion comprise entre 20 et 80°C.

Mais ledit premier composé peut être un matériau isolant sans changement de phase tel que du kérosène en mélange intime homogène avec un polymère polyuréthane, l'ensemble se présentant sous forme de gel, comme décrit dans WO 02/34809.

Dans les réalisations antérieures, ces gels isolants, de par leur structure élastomérique extrêmement souple et leur tenue mécanique relativement fragile, sont entièrement confinés par une enveloppe de protection souple ou semi-rigide, notamment entre une conduite interne en acier et une conduite externe en matériau thermoplastique, pour des portions de conduites rectilignes aussi bien que pour des portions de conduites coudées, notamment les conduites de jonction coudées décrites ci-dessus.

Pour ce faire, on prépare des enveloppes tubulaires préconstituées que l'on dispose par enfilement sur une conduite interne coaxiale, et on injecte le gel dans l'espace annulaire après avoir obstrué les extrémités du dit espace annulaire entre lesdites enveloppes tubulaires et conduites internes. D'autres procédés de réalisation de conduites de jonction coudées coaxiales de type PiP sont décrits dans le brevet WO 2010/063922.

Ces gels isolants présentent donc l'avantage de propriétés d'isolation thermique améliorées, tout en permettant une mise en oeuvre plus aisée que pour les matériaux isolants solides, notamment dans le cadre de conduites de jonction coudées ou encore dans des manchons d'isolation thermique tels que décrits dans WO 2010/049627.

La tenue mécanique de ces gels est toutefois insuffisante pour qu'ils puissent résister seuls aux contraintes mécaniques des conduites lors de leur manutention pendant la fabrication, le transport et l'installation sur site et pendant toute leur durée de vie.

Un autre inconvénient de ces gels isolants est que ledit premier composé, tel que le kérosène, a tendance s'exsuder en dehors de la matrice polymérique réticulée, pendant sa durée de vie.

Le but de la présente invention est de fournir un nouveau matériau d'isolation thermique présentant des propriétés d'isolation thermique et, le cas échéant, de flottabilité améliorées.

Un autre but de la présente invention est de fournir un nouveau matériau d'isolation thermique et/ou de flottabilité présentant une tenue mécanique importante, comme les mousses syntactiques de la technique antérieure, mais ne présentant pas de risque de fissuration et dégradation dans le temps dues à d'éventuels défauts de réticulation, comme décrit ci-dessus.

Un autre but de la présente invention est de fournir un matériau d'isolation thermique présentant une grande facilité de fabrication et de mise en oeuvre, notamment par coulage in situ dans un moule, pour former des pièces moulées dans une enveloppe protectrice préconstituée, apte à être disposée autour d'une conduite sous-marine ou coulée directement dans l'espace annulaire de conduites coaxiales, comme les gels isolants décrits dans la technique antérieure mentionnés ci-dessus, et plus généralement présentant les avantages appropriés pour une application à l'isolation thermique d'une conduite de jonction coudée.

Un autre but de la présente invention est de fournir un matériau d'isolation thermique et ou de flottabilité présentant une stabilité de composition et des propriétés mécaniques et thermiques au cours du temps, améliorées.

Selon la présente invention, on a découvert qu'il était possible d'obtenir un matériau d'isolation thermique et de flottabilité, rigide, présentant une quasi-incompressibilité similaire, voire supérieure, à celle de l'eau de mer, et présentant de plus des propriétés améliorées d'isolation thermique, de flottabilité et de facilité de mise en oeuvre, conformes au but de la présente invention, à partir d'une composition visqueuse de gel isolant, tel que décrit dans WO 02/34809, en la mélangeant avec des microbilles creuses, avant réticulation dudit gel, sous réserve de sélectionner les composants dudit gel isolant et leurs proportions massiques par rapport aux microbilles, comme défini ci-après.

Plus précisément, la présente invention fournit un matériau d'isolation thermique et/ou de flottabilité rigide caractérisé en ce qu'il est constitué d'un mélange de :
- (a) d'une matrice d'un mélange homogène de polymère élastomère réticulé et d'un composé plastifiant isolant liquide, ledit composé plastifiant isolant étant choisi parmi des composés issus d'huiles minérales, de préférence des hydrocarbures, et des composés issus d'huiles végétales, de préférence des esters d'huiles végétales, ledit composé plastifiant isolant n'étant pas un matériau de type à changement de phase à une température de -10° à +150°C, la proportion massique de dit composé plastifiant isolant dans ladite matrice étant d'au moins 60%, et
- (b) de billes creuses, de préférence des microbilles de verre, dispersées au sein d'une matrice dudit mélange homogène de dit polymère et dit composé plastifiant isolant, dans une proportion volumique de 40 à 65% du volume total du mélange desdites billes avec ladite matrice.

Un matériau selon la présente invention présente des propriétés d'isolation thermiques, de flottabilité et de résistance à la fissuration accrues ainsi qu'un coût inférieur par rapport à un matériau de mousse syntactique constituée des mêmes constituants mais sans composé plastifiant comme il sera explicité ci-après.

Les gels isolants décrits dans le document WO 02/34809 ont pour fonction essentielle de conférer une isolation thermique tout en présentant une résistance à la compression élevée du fait de leur caractère quasi incompressible quel que soit le niveau de pression, c'est-à-dire jusque dans les abysses (- 10 000 m), voire même au delà.

Dès lors, il n'était pas évident d'ajouter des microbilles creuses au sein d'un gel isolant du type de WO 02/34809 dans la mesure où lesdites microbilles creuses sont sujet à implosion lorsque leur pression limite de résistance mécanique est dépassée. En effet, le mélange du gel isolant de WO 02/34809 avec des microbilles creuses conformément au matériau défini dans la revendication 1 de la présente demande, présente une certaine rigidité et perd son caractère incompressible du fait de la présence des microbilles creuses.

Par ailleurs, il n'était pas évident qu'un matériau selon la présente invention présenterait une amélioration des propriétés d'isolation thermique par rapport à une mousse syntactique comprenant un même polymère et un même taux de microbilles creuses comme démontré selon la présente invention avec des microbilles creuses conformément à l'objet de la présente invention.

En fait, les inventeurs ont découvert de façon accidentelle que le mélange d'un gel isolant et de microbilles creuses présentait un avantage inattendu et non-évident en ce que sa flottabilité ne diminue pas, voire même croît avec la profondeur alors, qu'au contraire, la flottabilité d'un matériau de mousse syntactique (matériau similaire mais sans composé plastifiant) décroît de manière très significative avec la profondeur d'eau.

Cette flottabilité accrue en fonction de la profondeur découle du fait que le module de compressibilité dudit matériau isolant rigide selon l'invention est supérieur au module de compressibilité de l'eau, à savoir supérieur à 2200 MPa, le module de compressibilité de l'eau étant aux alentours de 2000 MPa.

En d'autres termes, l'accroissement de flottabilité dudit matériau résulte de ce que la densité de l'eau augmente davantage que celle dudit matériau en fonction de la profondeur à laquelle le matériau se trouve.

En conséquence, un matériau isolant rigide selon l'invention ou CBG est beaucoup plus performant en termes de flottabilité à grande profondeur, notamment pour les profondeurs de 1000 à 3500 m et au delà, en comparaison avec une mousse syntactique de l'art antérieure (matériau similaire sans composé plastifiant) dont le module de compressibilité n'excède pas 1600 MPa (voir exemple 3 ci-après).

En outre, comme explicité dans la description, dans une mousse syntactique on observe en cas de compression importante à grande profondeur des fissurations de la matrice et des brisures des microbilles qui rentrent en contact les unes contre les autres, alors que dans le matériau selon la présente invention la rupture des microbilles se produit pour une valeur de compression donc une profondeur d'eau de 15 à 30 % supérieure à celle de la mousse syntactique traditionnelle.

Les effets techniques avantageux du composé plastifiant au regard des propriétés des microbilles constituent des effets techniques nouveaux du composé plastifiant qui n'étaient ni décrits ni suggérés dans aucun des deux documents WO 02/34809 et FR 2587934.

Bien que les inventeurs ne veulent pas être liés par cette théorie, ils pensent que ces techniques avantageuses peuvent être expliquées par le fait qu'une pellicule de composé plastifiant reste toujours en surface des microbilles : les microbilles sont toujours séparées par une fine couche de mélange polymère/composé plastifiant qui joue alors le rôle de coussin ou d'amortisseur dans le cas de variations importantes de pression, de sorte que le phénomène de concentration de contraintes existant dans la mousse syntactique et se traduisant par des fissurations de la matrice et des brisures des microbilles ne se produit pas dans le matériau selon l'invention.

Enfin, le coût d'un matériau selon la présente invention est très inférieur à celui des mousses syntactiques de la technique antérieur dans la mesure où ledit composé plastifiant est d'un coût très inférieur à celui dudit polymère constitutif de la matrice.

Au total donc le matériau selon la présente invention fournit de meilleures propriétés mécaniques de résistance à la fissuration et une flottabilité accrue à grande profondeur ainsi qu'un coût moindre qu'un matériau de mousse syntactique comparable (composants similaires sans composé plastifiant).

Les avantages très importants et inattendus résultant de la composition nouvelle du matériau selon la présente invention exposés ci-dessus seront explicités ci-après.

On entend ici par "isolant thermique" un matériau dont les propriétés de conductivité thermique sont inférieures à 0,25 W/m/K et par "flottabilité positive" une densité inférieure à 1.

On entend ici par "matériau rigide", un matériau qui tient en forme par lui-même et ne se déforme sensiblement pas du fait de son propre poids lorsqu'il est préformé par moulage ou confiné dans une enveloppe flexible, et dont le module de Young λ est supérieur à 200 MPa, à la différence d'un gel qui reste extrêmement souple et dont le module de Young est quasiment nul.

On comprend que les molécules du dit composé plastifiant sont miscibles, donc compatibles en termes de polarité et chimiquement inerte avec ledit polymère et les composants pré polymères mono ou plurifonctionnels et/ou monomères lors de leur mélange avant réticulation, l'ensemble formant une composition réticulable par réaction desdits composants dudit polymère par mélange de ceux-ci entre eux, les molécules dudit composé plastifiant isolant étant emprisonnées et dispersées au sein d'un réseau tridimensionnel réticulé dudit polymère au fur et à mesure de la réticulation du réseau après mélange desdits composants, empêchant ou, à tout le moins, diminuant le suage et/ou la convection et/ou percolation dudit composé plastifiant isolant hors de la matrice après réticulation.

On comprend aussi que, de façon connue, ladite matrice de mélange homogène de polymère et composé plastifiant remplit l'intégralité des interstices entre les microbilles.

On entend ici par 'huile minérale', une huile hydrocarbonée issue de matériau fossile, notamment par distillation du pétrole, de la houille, et certains schistes bitumineux et "huile végétale ", une huile issue de plantes par extraction, notamment dans le cas d'huiles de colza, de tournesol ou de soja, et plus particulièrement par traitement dans le cas d'esters de ces huiles végétales.

De façon connue, les billes creuses sont remplies d'un gaz et résistent à la pression extérieure hydrostatique sous-marine. Elles ont un diamètre de 10 µm à 10 mm, et, pour des microbilles, de 10 à 150 µm, de préférence de 20 à 50 µm et ont une épaisseur de 1 à 2 microns, de préférence environ 1,5 µm. De telles microsphères de verre sont disponibles auprès de la société 3M (France).

Plus particulièrement, pour réaliser un matériau isolant selon la présente invention, ci-après dénommé de façon abrégée par "GBG" (Glass Bubble Gum), c'est à dire "gomme de billes de verre", résistant à 2 500 m, soit environ 25 MPa, on utilise avantageusement une sélection de microsphères dont la répartition gaussienne est centrée sur 20 µm, alors que pour une profondeur de 1 250 m, une répartition gaussienne centrée autour de 40 µm convient.

La stabilité de phase du composé plastifiant selon l'invention aux valeurs de température de -10° à +150°C, le rend compatible aux valeurs de température de l'eau de mer et des fluide pétroliers de production aux grands fonds.

Comme explicité ci-après, un matériau isolant rigide selon la présente invention, bien que relativement "rigide" au sens de la présente invention, présente un comportement mécanique en termes de compressibilité qui se rapproche d'une gomme élastomérique de par la faible valeur de son module de Young, alors qu'une mousse syntactique se comporte comme un solide.

La "rigidité" au sens de la présente invention du matériau isolant résulte essentiellement de la teneur massique élevée en dites microbilles, lesdites microbilles apportant également un gain de flottabilité et d'isolation thermique par rapport à un gel isolant de même composition.

Un matériau d'isolation thermique et/ou de flottabilité rigide selon la présente invention présente des propriétés de flottabilité, d'isolation thermique et de tenue mécanique, notamment de quasi-incompressibilité, supérieures aux mousses syntactiques traditionnelles et gels isolants de la technique antérieure, du fait des propriétés d'isolation thermique supérieures et valeurs de densité inférieures dudit composé plastifiant isolant constitutif qu'il contient dans la matrice polymère.

En outre, du fait du caractère plastifiant dudit composé plastifiant isolant, la réaction de réticulation du polymère de la matrice présente un caractère exothermique atténué ou, à tout le moins, la convexion et évacuation de la chaleur dégagée en cours du processus de réticulation ne provoquent pas de dégradation et/ou d'inhomogénéité dans la masse de la matrice en cours du processus de réticulation ou ultérieurement et, ce, notamment sur des fortes épaisseurs de matériau.

A cet égard, il y a lieu de noter qu'une fonction technique avantageuse essentielle dudit polymère de la matrice est de réduire les phénomènes de convexion, en empêchant le déplacement des molécules de dit composé plastifiant isolant.

Un autre avantage essentiel du matériau d'isolation thermique et/ou de flottabilité rigide selon la présente invention est son coût relatif très inférieur à celui des mousses syntactiques de la technique antérieure, dans la mesure où la mise en oeuvre dudit composé plastifiant isolant représente une réduction de coûts importante par rapport à un matériau comportant exclusivement une matrice polymérique, du fait que lesdits matériaux polymères réticulés sont plus onéreux que le composé plastifiant liquide selon la présente invention.

Enfin, du fait des propriétés dudit composant plastifiant isolant dans le domaine de températures indiquées, ainsi que des valeurs de transition vitreuse dudit polymère, le matériau d'isolation thermique selon la présente invention peut être mis en oeuvre pour véhiculer des fluides chauds, tels que, notamment, des pétroles de production à des températures pouvant aller de -10°C à 150°C et, ce, donc, dans des mers froides, comme c'est le cas dans les mers à grande profondeur, dont la température de l'eau est d'environ 2 à 4°C.

Un autre avantage du matériau rigide selon la présente invention, par rapport notamment au gel isolant de la technique antérieure, tient en ce que ledit composé plastifié isolant est davantage emprisonné dans la matrice polymère, laquelle présente une stabilité accrue dans le temps en termes de composition, ledit composé plastifiant s'exsudant moins en dehors de la matrice du fait que ledit composé plastifiant isolant est davantage emprisonné dans ladite matrice polymérique solidifié que dans le gel isolant de la technique antérieure. Il en résulte une propriété de convexion thermique réduite dudit matériau rigide isolant par rapport au gel isolant de la technique antérieure.

Il y a lieu d'observer que des mélanges homogènes de polymères et composés plastifiants isolants, mis en oeuvre dans le matériau rigide selon la présente invention, avaient déjà été mis en oeuvre sous forme de gels isolants dans WO 02/34809, mais il n'avait jamais été envisagé, ni suggéré, qu'il soit possible de les formuler en mélange avec des microbilles creuses, pour obtenir des matériaux rigides avantageux conformes à la présente invention, ceci d'autant plus que ces gels isolants étaient recherchés essentiellement pour leur caractère de résistance élevée à la compression du fait de leur caractère quasi-incompressible quelque soit le niveau de pression, c'est à dire jusque dans les abysses (- 10 000 m), lequel caractère incompressible disparait dans le matériau rigide selon la présente invention du fait de la présence des microbilles creuses sujettes à implosion lorsque leur pression limite de résistance mécanique est dépassée.

Plus particulièrement, le matériau rigide isolant selon la présente invention présente une densité inférieure à 0,7, de préférence inférieure à 0,6, et une conductivité thermique dudit matériau inférieure à 0,15 W/m/K, de préférence inférieure à 0,13 W/m/K, et un module de Young ou module de compression triaxiale dudit matériau de 100 à 1 000 MPa, de préférence de 200 à 500 MPa et un module de compressibilité dudit matériau isolant rigide supérieur à 2 000 MPa, de préférence supérieur à 2 200 MPa, c'est-à-dire un module de compressibilité supérieur à celui de l'eau.

Il y a lieu de noter qu'aucun matériau d'isolation thermique et/ou de flottabilité de la technique antérieur ne présente les caractéristiques combinées de flottabilité, d'isolation thermique et de compressibilité telles que définies ci-dessus.

Comparativement, un même matériau sans microbilles, se présente sous forme de gel isolant de conductivité thermique supérieure à 0,13 W/m.k.

Plus particulièrement encore, le matériau rigide isolant selon la présente invention, ci-après dénommé de façon abrégée par "GBG", présente un module élastique en compression triaxiale, ou module de Young, compris entre 100 et 1000 MPa, de préférence entre 200 et 500 MPa, le module de compressibilité du GBG ("bulk module" en anglais) étant similaire, voire supérieurà celui de l'eau de mer, dont la compressibilité est de l'ordre de 2 100-2 200 MPa selon la salinité et la température. Ainsi, à grande profondeur, la densité de l'eau de mer augmente plus vite que celle du GBG et donc la flottabilité dudit GBG est soit indépendante de la profondeur d'eau, soit croît légèrement avec la profondeur d'eau. En revanche, une mousse syntactique de polyuréthane ou d'époxy de l'art antérieur présente un module de Young proche de son module de compressibilité d'une valeur d'environ 1 500 - 1 600 MPa et sa flottabilité décroît donc de manière significative avec la profondeur d'eau. En conséquence, le matériau isolant rigide selon l'invention ou GBG est beaucoup plus performant en termes de flottabilité et d'isolation que les mousses syntactiques de l'art antérieur, ceci étant d'autant plus accentué que la profondeur d'eau devient importante, c'est à dire pour des profondeurs de 1 000 à 3 500 m, voire plus.

La meilleure performance du GBG selon l'invention est dû au fait que le module de compressibilité du composé plastifiant est très élevé, alors que celui du polymère élastomère est plutôt faible ce qui augmente de ce fait drastiquement ledit module de compressibilité du GBG. Ainsi, une mousse syntactique se comporte comme un solide, tandis que le matériau isolant rigide ou GBG selon la présente invention se comporte comme un élastomère souple de par la faible valeur de son module de Young.

Un matériau isolant rigide selon la présente invention résiste donc mieux à la compression qu'une mousse syntactique de même composition de polymère et proportion de mêmes microbilles à des niveaux de contrainte de pression hydrostatique sous-marine où une dite mousse syntactique se dégrade et se fissure. Il semble que ceci soit lié aux propriétés physico-chimiques dudit composé plastifiant. Plus précisément, le composé plastifiant huileux augmente l'adhérence de la matrice à la surface desdites microbilles et les dites microbilles sont en permanence recouverte d'une pellicule de matrice dudit polymère et dit composé plastifiant, et, ce, même en cas de compression importante. Ainsi, un matériau rigide isolant selon la présente invention résiste mieux à la compression qu'une mousse syntactique, sans se fissurer et sans perte d'isolation thermique et/ou flottabilité du fait de la rupture des microbilles, c'est à dire sans rupture des microbilles pour une valeur de compression, donc une profondeur d'eau, de 15 à 30% supérieure à celle de la mousse syntactique traditionnelle. Dans la mousse syntactique, on observe, en cas de compression importante et de fissuration de la matrice, que les microbilles adjacentes rentrent en contact direct les unes contre les autres et se brisent, alors que, dans le matériau selon l'invention, ce phénomène requiert des compressions plus importantes vraisemblablement parce que les microbilles restent entièrement revêtues sur toutes leurs surfaces d'une couche du mélange de dite matrice.

Le comportement mécanique du matériau isolant rigide selon la présente invention, ci-après dénommé "GBG" ("Glass Bubble Gum") est radicalement différent de celui d'une mousse syntactique de polyuréthane ou d'époxy. En effet, dans une mousse syntactique, les microbilles de verre emprisonnées dans la matrice polymère servent principalement à créer des microcavités parfaitement sphériques, ces microcavités résistant à l'implosion grâce à la rigidité de la résine d'imprégnation, soit un polyuréthane ou époxy. Ainsi, lors de l'imprégnation de la microsphère, ces dernières se trouvent en contact ponctuel les unes avec les autres. Lorsque la mousse polymère est soumise à une forte pression extérieure, il s'en suit des déformations significatives de cette résine rigide laquelle se comporte comme un solide, conduisant à des concentrations de contraintes locales, ces dernières se produisant en général très localement et conduisant à une destruction des microsphères de ladite zone, puis à une déformation des microcavités, et enfin à l'effondrement de la structure de la mousse syntactique dans cette zone localisée restreinte. Le processus se propage alors en général sur des distances qui peuvent être importantes et, dans le cas de conduites isolées, on voit alors apparaître des effondrements localisés ou des fissures dans le revêtement isolant, lesdites fissures pouvant avoir plusieurs centimètres, voire plusieurs décimètres, s'étendant parfois sur tout le pourtour de ladite conduite.

En revanche, le comportement du matériau rigide isolant selon la présente invention ou GBG est radicalement différent, car il se comporte comme un élastomère souple et non pas comme un solide, en raison de la forte proportion de composé plastifiant dans le produit final et de ses propriété physico-chimiques en tant que composé issu d'huile minérale ou végétale. En effet, le matériau isolant rigide garde une souplesse interne importante, donc une capacité importante de déformation locale. Ainsi, lorsque la pression P extérieure augmente, l'intégralité du volume interne de ladite matrice du matériau isolant rigide ou GBG se trouve sensiblement à ladite pression P et chacune des microsphères se trouve en contact intime avec le composé de matrice, polymère - composé plastifiant. Les contacts directs entre deux ou plusieurs microsphères ne sont plus ponctuels, comme c'est le cas dans la mousse syntactique, car les microbilles sont toujours séparées par le mélange polymère - composé plastifiant qui joue alors le rôle de coussin ou d'amortisseur dans le cas de variations brusques de pression, par exemple des variations dues à un choc extérieur sous la pression P correspondant à la profondeur à laquelle se trouve ledit matériau isolant ou GBG. Ainsi, dans le matériau isolant rigide selon l'invention ou GBG, le phénomène de concentration de contraintes existant dans la mousse syntactique ne se produit pas. Le composé plastifiant isolant remplit, dans le matériau isolant rigide selon la présente invention, un effet technique nouveau.

Plus particulièrement donc, lesdites microbilles sont en contact direct les unes contre les autres, mais leurs surfaces externes restent entièrement revêtues d'au moins une pellicule de mélange de dite matrice, ledit mélange occupant l'intégralité des interstices entre lesdites microbilles. Cette pellicule de matrice est facilement déformable.

Plus particulièrement, ledit composé plastifiant présente un module de compressibilité supérieur à celui dudit polymère, de préférence supérieur à 2 000 MPa, une conductivité thermique, ainsi qu'une densité, inférieure à celle dudit polymère, de préférence une conductivité thermique inférieure à 0,12 W/m/K et une densité inférieure à 0,85, de préférence encore de 0,60 à 0,82.

Plus particulièrement, un matériau isolant rigide selon la présente invention présente les caractéristiques suivantes :
- le rapport en masse dudit polymère réticulé et dudit composé plastifiant isolant est de 15/85 à 40/60 de préférence de 20/80 à 30/70, et
- le rapport en volume desdites microbilles par rapport au volume de ladite matrice de polymère réticulé et de dit composé isolant est de 35/65 à 65/35, de préférence de 40/60 à 60/40, de préférence encore de 45/55 à 57/43.

Au-delà de 85% de composé plastifiant dans la matrice, celui-ci risque de s'exsuder en dehors de celle-ci.

Avantageusement encore, ledit polymère présente une température de transition vitreuse inférieure à -10°C, sa stabilité de phase étant ainsi compatible aux valeurs de température de l'eau de mer et des fluides pétroliers de production aux grands fonds.

Plus particulièrement, ces propriétés de compressibilité et des propriétés d'isolation thermique et densité comparatives dudit composé plastifiant et dit polymère sont respectées lorsque, conformément à un mode préféré de réalisation, ledit polymère réticulé est de type polyuréthane et ledit composé plastifiant liquide est un produit pétrolier, dit de coupe légère du type carburant.

Des composés plastifiants isolants de ce type présentent l'avantage additionnel d'un coût d'environ 5 à 10 fois inférieur à celui des polymères tels que le polyuréthane mis en oeuvre dans les mousses syntactiques traditionnelles.

Plus particulièrement encore, ledit composé plastifiant est choisi parmi le kérosène, gazole, essence et white spirit.

Ces carburants, à l'exception des essences, présentent en outre l'avantage de présenter un point éclair supérieur à 90°C, écartant ainsi tout risque d'incendie ou d'explosion dans le processus de fabrication.

Un kérosène présente une conductivité thermique d'environ 0,11 W/m/K.

Dans un autre mode de réalisation, on met en oeuvre un composé plastifiant issu d'huile végétale du type biocarburant, de préférence un ester d'huile d'origine végétale, notamment un ester alcoolique d'huile végétale, de colza, de tournesol ou de soja.

Plus particulièrement, ledit polymère est un polyuréthane résultant de la réticulation de polyol et de poly iso cyanate, ledit polyol étant de préférence du type branché, de préférence encore au moins en étoile à 3 branches, et le polyisocyanate étant un pré polymère d'isocyanate et/ou polymère polyisocyanate.

Plus particulièrement encore, ledit polymère polyuréthane résulte de la réticulation par polyaddition de polydiène hydroxylé, de préférence polybutadiène hydroxylé, et de polyisocyanate aromatique, de préférence le 4,4'-diphényl-méthane diisocyanate (MDI) ou un MDI polymérique.

De préférence, le rapport molaire NCO/OH des deux composants polyol et polyiscocyanate est de 0,5 à 2, de préférence supérieur à 1, de préférence encore de 1 à 1,2. Un excès de NCO garantit que la totalité des OH a réagi et que la réticulation est complète ou, à tout le moins, optimale.

Avantageusement, ledit matériau rigide est confiné dans une enveloppe protectrice.

L'enveloppe extérieure peut être en métal, comme le fer, l'acier, le cuivre, l'aluminium et les alliages métalliques, mais aussi peut être également en matière synthétique polymérique, comme le polypropylène, le polyéthylène, le PVC, les polyamides, les polyuréthanes ou tout autre polymère transformable en tubes, en plaques ou en enveloppes, ou encore obtenue par rotomoulage de poudres thermoplastiques, ou encore en matériaux composites. L'option d'enveloppes en matières polymères citées plus haut est une option d'autant plus pratique et efficace que la solution de l'invention, permettant l'obtention d'un matériau isolant rigide selon l'invention, rend possible l'utilisation de matériaux d'enveloppe moins rigides, plus légers et moins difficiles à mettre en oeuvre et, par conséquent, moins coûteux globalement.

L'enveloppe extérieure peut être, de préférence, une couche épaisse plus ou moins rigide, de quelques millimètres à plusieurs centimètres d'épaisseur, mais peut se présenter aussi sous forme de film souple ou semi rigide.

L'espace libre entre la conduite de transport de fluide et l'enveloppe extérieure, où sera appliqué le matériau isolant rigide selon l'invention, peut être variable et sera défini en fonction du degré d'isolation souhaité, calculé à partir du coefficient d'isolation du matériau isolant rigide selon l'invention et des températures à maintenir, ou de la flottabilité souhaitée calculé à partir de la densité du matériau isolant rigide selon l'invention.

Plus particulièrement, ledit matériau isolant rigide se présente sous forme de pièce prémoulée, de préférence apte à être appliquée autour d'une conduite sous-marine ou un élément de conduite sous-marine pour en assurer l'isolation thermique et/ou la flottabilité et résistant à la pression hydrostatique sous-marine, de préférence à une grande profondeur d'au moins 1 000 m.

Selon un autre mode de réalisation, ledit matériau isolant rigide selon l'invention n'est pas pré-moulé mais moulé in situ, par coulage avant réticulation comme explicité dans le procédé selon l'invention ci-après.

De façon connue de l'homme de l'art, le temps de prise, qui est le temps nécessaire pour que la composition selon la présente invention soit totalement réticulée, peut varier dans une large mesure. Cependant, ce temps de prise peut être ajusté, notamment par la mise en oeuvre d'une certaine proportion de catalyseur de réticulation pour obtenir un temps de prise adéquat.

La présente invention fournit également un procédé de préparation d'un matériau isolant rigide selon l'invention, caractérisé en ce que l'on réalise les étapes suivantes dans lesquelles :
1/- on mélange ledit composé liquide isolant et les monomères et/ou pré polymère aptes à réagir notamment par polyaddition, pour former dudit polymère réticulé, jusqu'à obtenir un mélange homogène, de préférence en tirant au vide, à savoir en aspirant l'air et autres vapeurs de gaz par tirage au vide, pour obtenir un mélange dégazé, et
2/- on mélange un mélange homogène de l'étape 1/- avec desdites microbilles pour obtenir un mélange homogène, notamment de consistance fluide à pâteuse, de préférence par tirage au vide, et
3/- ledit mélange de l'étape 2/- est laissé au repos pour que la réaction jusqu'à réticulation complète forme un dit matériau isolant thermique rigide, de préférence étuvé à une température de 18 à 30°C et pendant au moins 24 heures, de préférence encore 24 à 72 heures.

L'aspiration de l'air par tirage au vide permet d'obtenir un mélange dégazé ce qui est avantageux car le matériau isolant rigide selon l'invention est alors quasi-incompressible et présente un module de compressibilité de l'ordre de 2200 MPa, alors que la présence de micro-bulles d'air ou de gaz conduirait à une réduction drastique du matériau dès qu'il serait soumis à une pression externe, donc dès qu'il serait à grande profondeur sous le niveau de la mer.

Plus particulièrement, comme mentionné précédemment, à l'étape 3/-, on réalise les étapes successives dans lesquelles :
3a/- on coule ou injecte ledit mélange de l'étape 2/- dans une enveloppe servant de moule ou dans un espace formé par (a) la surface externe d'un élément de conduite ou conduite sous-marine à isoler et/ou dont on désire augmenter la flottabilité, et (b) la surface intérieure d'une dit enveloppe protectrice, puis
3b/- on laisse ledit mélange au repos dans ladite enveloppe jusqu'à réticulation et solidification complète in situ.

Avantageusement, ladite enveloppe est réalisée en polyéthylène, polypropylène, polyamide et/ou PVDF, de préférence par roto moulage ou extrusion.

La présente invention a donc également pour objet une utilisation d'un matériau d'isolation thermique et/ou de flottabilité rigide selon l'invention, pour l'isolation et/ou la flottabilité d'une conduite sous-marine ou élément de conduite sous-marine.

Plus particulièrement, ledit élément de conduite sous-marine est un élément de conduites coaxiales de jonction coudée.

Plus particulièrement encore, ladite conduite véhicule un fluide chaud à une température de 20 à 80°C dans une eau de mer dont la température est inférieure à 20°C, de préférence inférieure à 4°C, de préférence à une grande profondeur d'au moins 1 000 m.

Plus particulièrement encore, la présente invention fournit une conduite de jonction sous-marine isolée thermiquement, constituée de conduites coaxiales de type PiP, telle que décrite dans WO 2010/063922, assurant la jonction entre deux portions de conduites sous-marines isolées thermiquement, ladite conduite de jonction comportant une conduite interne coudée rigide, de préférence en acier et présentant un rayon de courbure de 3 à 10 fois son diamètre externe, de préférence 4 à 5 fois son diamètre externe, revêtue d'un matériau isolant thermique, comprenant :
- une enveloppe externe entourant ladite conduite interne, en matériau souple ou semi-rigide suivant la forme coudée de ladite conduite interne, de manière concentrique,
- la paroi tubulaire de ladite enveloppe externe comportant des éléments structurels de renfort de forme annulaire ou hélicoïdale aptes à permettre la courbure de ladite paroi tubulaire de l'enveloppe externe tout en maintenant sa section transversale sensiblement uniforme, de préférence sensiblement circulaire, et concentrique à la section transversale de ladite conduite interne, en dépit de sa courbure pour suivre le contour coudé de ladite conduite interne selon son dit rayon de courbure, et
- une pluralité d'éléments de support dénommés éléments centraliseurs en matériaux rigide plastique ou composite intercalés entre ladite conduite interne et ladite enveloppe externe de façon à maintenir les sections transversales desdites enveloppe externe et conduite interne sensiblement concentriques, lesdits éléments centraliseurs étant espacés dans la direction axiale de ladite conduite tous les au moins 1m, de préférence tous les 3 à 10 m, et
- une pluralité d'éléments de guidage longitudinaux constitués en matériau rigide ou semi-rigide, disposés à distance sensiblement constante, de préférence constante, de la surface de la conduite interne coudée, s'étendant entre deux éléments centraliseurs successifs sur la périphérie desquels les extrémités desdits éléments de guidage longitudinaux reposent, de préférence au moins quatre dits éléments de guidage régulièrement répartis sur la périphérie desdits éléments centraliseurs, et
- un matériau isolant thermique rigide selon l'invention, remplissant entièrement l'espace annulaire entre ladite conduite interne et ladite enveloppe externe.

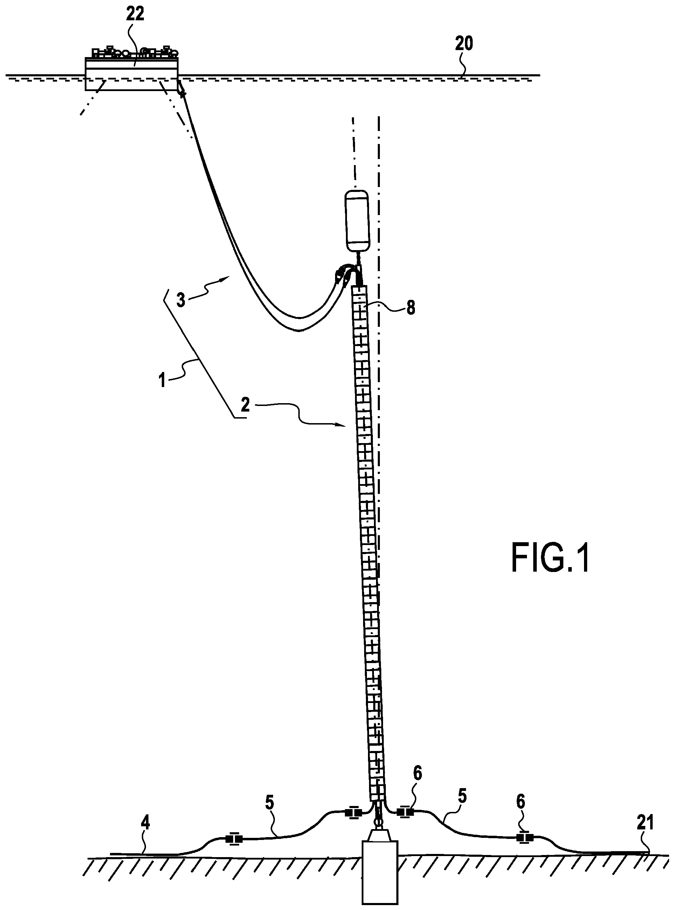

D'autres caractéristiques et avantages de la présente invention apparaîtront à la lumière de la description détaillée qui va suivre, en référence aux figures 1 à 4 suivantes dans lesquelles :
- la figure 1 représente une liaison fond-surface entre un support flottant 22 en surface 20 et une conduite sous-marine 4 reposant sur le fond de la mer 21, constituée d'une tour hybride 1 constituée d'au moins un riser 2, constitué d'une conduite rigide, et une au moins conduite flexible 3 assurant la liaison entre l'extrémité supérieure du ou desdits risers et ledit support flottant 22, la jonction entre la conduite sous-marine 4 et l'extrémité inférieure du (ou des) dit(s) riser(s) 2 étant réalisée à l'aide de conduite(s) de jonction coudée(s) 5;

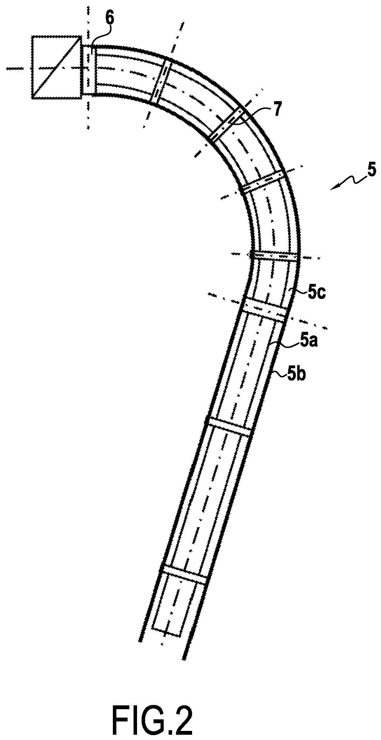

- la figure 2 représente un exemple de portion de conduite de jonction coudée, constituée de conduites coaxiales;

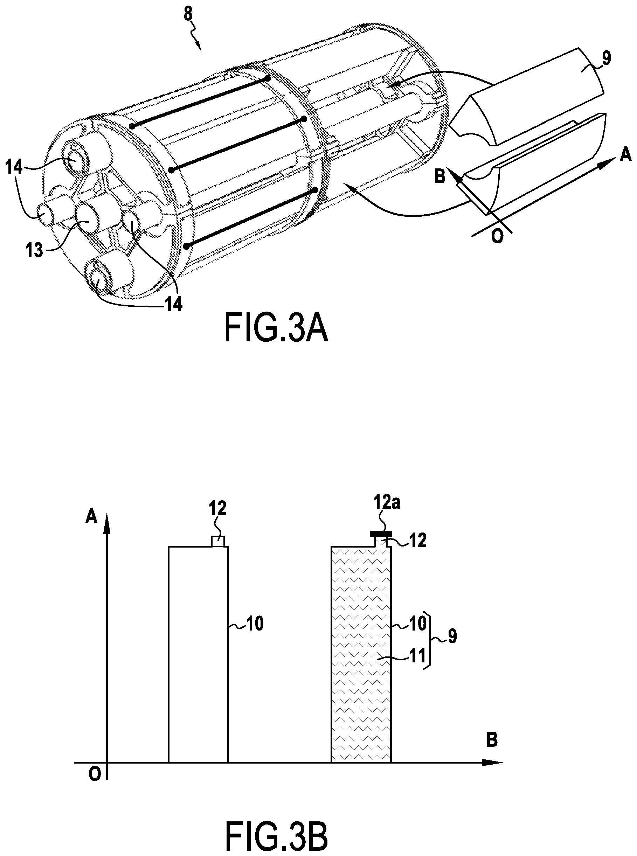

- la figure 3A représente un module de flottabilité 8, apte à coulisser le long du ou desdits risers 13 ou 14, comprenant éventuellement un tendon central 13, ledit module de flottabilité 8 étant équipé d'éléments de flottabilité en forme de coquille de section cylindrique 9;
- la figure 3B représente une vue en coupe longitudinale d'une dite coque d'éléments de flottabilité 9, constituée d'un matériau isolant rigide selon l'invention 11 protégé d'une enveloppe protectrice 10, remplie entièrement de dit matériau isolant rigide 11 par coulage à travers un orifice 12 fermé d'un bouchon 12a, ladite coque étant représentée vide sur la gauche et pleine et bouchée sur la droite;

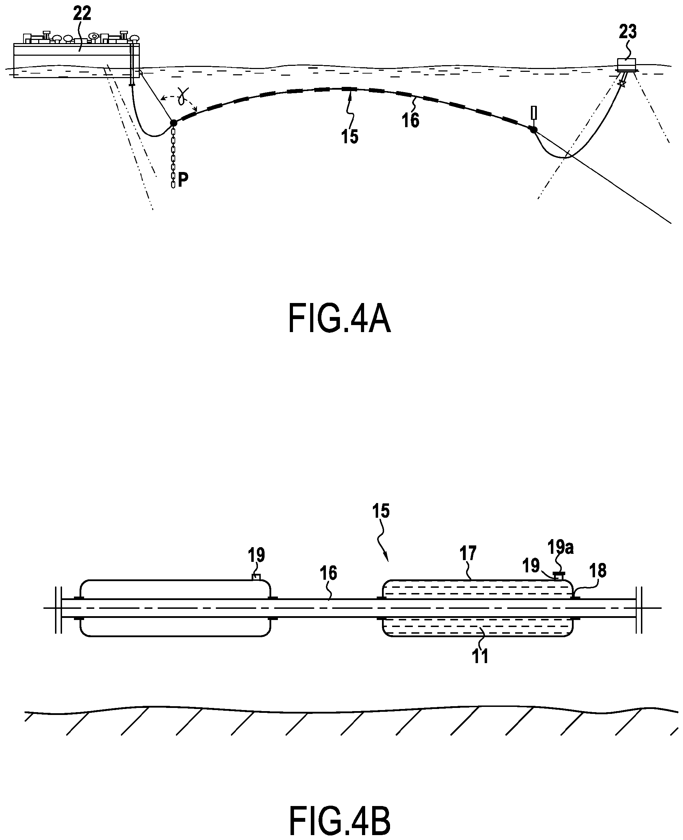

- la figure 4A représente une installation comportant une conduite d'export 16 entre un support flottant 22 et une bouée de déchargement 23, ladite conduite d'export 16 étant équipée de flotteurs coaxiaux 15;
- la figure 4B représente en coupe longitudinale la conduite 16 équipée de flotteurs coaxiaux 15, entièrement remplis de matériau isolant rigide selon l'invention 11 coulé avant réticulation dans l'enceinte 17 du flotteur, l'enveloppe de gauche étant assemblée de manière étanche sur la conduite 16, vide et présentant un orifice de remplissage 19, celle de droite étant pleine et bouchée en 19a.

Une méthode générale de préparation et de mise en place d'un matériau isolant rigide selon l'invention, ou CBG, comprend les étapes successives suivantes :
1- on mélange sous agitation du polyol avec du kérosène, et
2- on ajoute sous agitation de l'iso cyanate dans un ratio massique de polyol / iso cyanate de 30/1 à 35/1, correspondant à un ratio molaire NCO/OH de 1 à 1,2, le ratio massique polymère/kérosène étant de 23/77 à 27/73, les mélanges ci-dessus étant effectués intimement sous aspiration sous vide pour obtenir un mélange homogène de fluide à pâteux, puis
3- le mélange homogène non réticulé ci-dessus est épaissi avec des microbilles de verre dans un ratio massique de 75/25 à 65/35, sous aspiration sous vide pour obtenir un mélange de fluide à pâteux, saturé en microbilles, puis
4- ledit mélange est coulé dans une enveloppe servant de moule et entourant l'élément à isoler ou à alléger (flottabilité), et l'ensemble est laissé au repos, le cas échéant étuvé à une température de 18-25°C, pour une durée de 24 à 72 heures, jusqu'à réticulation complète de l'ensemble.

L'enveloppe a pour fonction d'isoler le matériau isolant rigide de l'eau de mer ambiante à grande profondeur de manière à éviter la migration du composé plastifiant, le cas échéant du kérosène, vers le milieu ambiant pendant toute la durée de vie des installation, c'est à dire pendant 25 à 30 ans, voire plus.

Dans les exemples 1 et 2 de réalisation décrits ci-après, les constituants suivants ont été mis en oeuvre :
- PolyBd®45HTLO = polybutadiène hydroxylé de masse moléculaire moyenne en nombre Mn égale à 2 800 de polydispersité Mw/Mn = 2,5, présentant un indice d'hydroxyle de 47,1 mg KOH/g, une viscosité de 8 000 mPa.s à 23°C et une densité de 0,925, et une température de transition vitreuse de -75°C. Ce produit est commercialisé par la société CRAYVALLEY (France).
- Isonate® 143L = commercialisé par la société DOW CHEMICAL = MDI polymérique présentant une teneur NCO égale à 29,2%, une viscosité à 25°C égale à 33 cps (33 mPa.s).
- Ketrul® 211 = kérosène désaromatisé commercialisé par la société TOTAL Fluides du groupe TOTAL (France),
- des microbilles de références commerciales S38XHS de la société 3M, constituées de verre boro-silicate alumino-sodique de type pyrex®, de diamètre moyen de 10 à 40 µm, d'épaisseur des parois d'environ 1,5 µm, et de densité vraie 0,38, et dont plus de 90% sont capables de résister à une pression externe de 5500 PSI, c'est à dire sensiblement 38 MPa. On entend par "densité vraie" la densité des microbilles seules et non pas la densité d'un volume de 1l rempli de billes : - en effet, ces dernières étant en contact les unes avec les autres, il reste alors au sein de ce volume de 1 l, un volume libre entre lesdites microbilles : - la densité dans ce cas est une densité apparente ("bulk density") qui est alors beaucoup plus faible que la densité vraie, mais n'a pas vraiment de sens vis-à-vis du composé final selon l'invention.

### Exemple 1 :

Pour obtenir 1 m³ de mélange fluide à pâteux du matériau isolant selon l'invention, avant réticulation, obtenu à l'étape 4/- ci-après, dont la consistance est assez liquide pour sa mise en place dans l'enveloppe, on réalise les étapes successives suivantes, dans lesquelles :
1/- on mélange 116.5 kg de PolyBd® avec 350 kg de Ketrul® de densité 0,81, puis on tire au vide et on agite pendant quelques minutes, puis
2/- on ajoute 19.2 kg d'Inosate®, et on continue à mélanger sous vide pendant plusieurs minutes, puis
3/- on incorpore 162 kg de microbilles de verre et on continue à mélanger sous vide pendant plusieurs minutes jusqu'à obtenir que le matériau se présente sous la forme d'une pâte fluide, et
4/-on verse la pâte fluide de l'étape 3/- dans une enveloppe, puis on laisse reposer le tout pendant plusieurs heures, voire plusieurs jours, jusqu'à réticulation complète.

Les ratios en volumes correspondants sont de 42,6% de microsphères pour 57,4% de gel.

Le matériau isolant réticulé selon la présente invention ainsi obtenu, ci-après dénommé "GBG", a une densité de 0,648 vis-à-vis de l'eau douce, ce qui donne alors une flottabilité de 352 litres/m³ de GBG, soit une flottabilité positive de 363 kg/m³ de GBG, pour une eau de mer de densité 1,03.

La conductivité thermique de ce matériau isolant rigide selon l'invention ou GBG est d'environ λ=0,13 W/m/K.

Comparativement, un gel isolant constitué du même polyuréthane à base de PolyBd® et Inosate® avec le même ratio de Ketrul® 211, présenterait une conductivités thermiques de λ=0,14 W/m/K, et un matériau isolant de type mousse syntactique constitué du même polyuréthane à base de PolyBd® et Inosate® (sans Ketrul®), avec le même ratio de mêmes microbilles de verre, présenterait une conductivité thermique de À=0,17-0,18 W/m/K.

### Exemple 2 :

De la même manière, on obtient 1 m³ de mélange pâteux avant réticulation à l'étape 3/- ci-dessus à consistance plus visqueuse en mélangeant selon le même processus que précédemment, 91,5 kg de PolyBd® avec 274,5 kg de Ketrul®, puis 15,1 kg d'Inosate®, puis 209 kg de microbilles de verre. Les ratios en volumes correspondants sont de 55% de microsphères pour 45% de gel.

Le matériau isolant selon l'invention, dénommé GBG, obtenu après réticulation, a alors une densité de 0,590 vis-à-vis de l'eau douce, ce qui donne alors une flottabilité de 410 litres/m³ de GBG, soit une flottabilité de 422,5 kg/m³ de GBG pour une eau de mer de densité 1,03. On observe ainsi un accroissement de flottabilité de 16,4% par rapport à la formulation plus fluide de l'exemple 1.

La conductivité thermique de ce matériau isolant rigide selon l'invention ou GBG, est de À=0,12 W/m/K.

Comparativement, un gel isolant et un matériau isolant de type mousse syntactique constitué du même polyuréthane à base de PolyBd® et Inosate®, (sans Ketrul® et) avec le même ratio de mêmes microbilles de verre en ce qui concerne la mousse syntactique), présenteraient des conductivités thermiques de λ=0,13 W/m/K pour le gel et À=0,17-0,18 W/m/K pour la mousse syntactique.

### Exemple 3 :

Pour les deux matériaux isolants rigides selon l'invention ou GBG des exemples 1 et 2, on obtient un module de Young proche de 400 MPa en fin de processus de réticulation, puis il décroit de manière asymptotique vers 250-300 MPA après 10 ou 20 ans (tests en vieillissement accéléré).

Le module de compressibilité du GBG ("bulk module" en anglais) est de l'ordre de 2 250 MPa.

Comparativement, un matériau isolant de type mousse syntactique constitué du même polyuréthane à base de PolyBd® et Inosate®, sans Ketrul® 211, avec le même ratio de mêmes microbilles de verre, présenterait un module de Young de 200 à 600 MPa et un module de compressibilité d'une valeur d'environ 1 600 MPa.

Comparativement, un gel isolant constitué du même polyuréthane à base de PolyBd® et Inosate®, avec le même ratio de Ketrul® 211, présenterait un module de compressibilité d'une valeur d'environ 1 900 MPa et un module de Young quasiment nul, car il se comporte alors comme un fluide.

### Exemple 4 :

La formulation relativement la plus fluide de mélange pâteux de l'étape 3/- de l'exemple 1 est plus adaptée pour le remplissage d'enveloppes délimitant de faible épaisseurs de matériaux isolant, notamment de 3 à 10 cm et/ou de grandes longueurs de matériaux isolants, notamment de 5 à 20 m, tels que requis pour l'isolation de conduites de jonction coudées coaxiales décrites dans le brevet WO 2010/063922 et dans les figures 1 et 2. Dans ce cas, en effet, l'enveloppe du matériau isolant est constituée par la surface externe de la conduite interne 5a et la surface interne de la conduite externe 5b, l'espace annulaire 5c étant fermé à ses extrémités longitudinales par des bouchons 6. Et, les éléments centraliseurs 7 sont perforés pour laisser s'écouler ledit mélange pâteux de l'étape 3/- avant réticulation.

Il convient de noter que, dans ce type d'application très particulière, on recherche plus le caractère isolant du GBG que sa performance en termes de flottabilité, ce qui justifie l'utilisation d'un GBG de consistance plutôt fluide. Et, il est nécessaire de réaliser un compromis en termes de fluidité et de performances thermiques de manière à garantir une bonne mise en place du GBG dans cet espace de faible épaisseur et de grande longueur.

### Exemple 5 :

Les matériaux isolants ou GBG selon la présente invention, obtenus à l'exemple 2, sont plus particulièrement utiles pour préparer des modules de flottabilité 8, tels que décrits figures 1 et 3A-3B, comprenant des coquilles 9 préconstituées, comprenant un matériau isolant selon l'invention 11 coulé dans et protégé par une enveloppe 10. Les modules de flottabilité 8 sont destinés à coulisser autour et isoler des risers 2, 13, 14, d'une installation représentée figure 1, tel que décrit dans WO 2010/097528. Ces modules de flottabilité 8 permettent d'obtenir des flottabilités positives réparties sur des portions de longueur de conduites avec une plus grande épaisseur de matériau isolant 11, notamment de 10 à 30 cm, mais sur des longueurs réduites en ce qui concerne les éléments de flottabilité 9, à savoir de 1 à 10 m. Les modules de flottabilité 8 peuvent être mis en oeuvre sur des conduites, aussi bien en position verticale qu'en position horizontale.

### Exemple 6 :

Selon un autre mode de réalisation, comme représenté sur les figures 4A et 4B, on coule in situ le mélange pâteux de l'étape 3/- de l'exemple 2 dans une enceinte de flotteur 15, constituée de paroi externe tubulaire flexible ou rigide 17 fermée et fixée de manière étanche à ses extrémités longitudinales 18 autour de la surface externe d'une conduite d'export 16, formant ainsi une enceinte étanche entre la conduite 16 et la paroi interne de l'enveloppe 17. Le mélange pâteux de l'étape 3/- est coulé dans ladite enceinte de flotteurs 15 à travers un orifice 19 fermé par un bouchon 19a. Ce type de conduite d'export 16 a été décrit plus en détail dans WO 2006/120351 et WO 2009/138609.

Dans ce type de conduite export, la dite conduite se trouve à faible profondeur, en général entre 50 et 100 m sous la surface de l'eau : - la pression du milieu ambiant est alors de 0,5 à 1 MPa. Il est alors avantageux d'utiliser des microsphères présentant une résistance à la pression plus faible que dans les exemples précédents 1 et 2. A cet effet, on utilisera avantageusement des microsphères référencées K20 (3M France). Ces dernières ont une densité vraie de 0,2, donc considérablement réduite, mais aussi une pression maximale d'implosion réduite à 500 PSI (∼3,5 MPa), ce qui est parfaitement adapté à la profondeur d'installation desdites lignes d'export. Ainsi, on prépare 1 m³ d'un mélange pâteux de viscosité similaire à celui de l'exemple 2, avec 91,5 kg de PolyBd® avec 274,5 kg de Ketrul®, puis 15,1 kg d'Inosate®, puis 110 kg de microbilles de verre de type K20 (3M France). Les ratios en volumes correspondants sont de 55% de microsphères pour 45% de gel.

Le matériau isolant selon l'invention, dénommé GBG, obtenu après réticulation, a alors une densité de 0,491 vis-à-vis de l'eau douce, ce qui donne alors une flottabilité de 509 litres/m³ de GBG, soit une flottabilité de 524,5 kg/m³ de GBG pour une eau de mer de densité 1,03. On observe ainsi un accroissement de flottabilité de 44,5% par rapport à la formulation plus fluide de l'exemple 1, et un accroissement de flottabilité de 24,1% par rapport à la formulation pâteuse de l'exemple 2.

### Exemple 7 :

De la même manière, pour une liaison fond-surface telle que décrite en référence à la figure 1, les éléments de flottabilité de la partie inférieure de la colonne montante seront avantageusement réalisées en utilisant des microsphères haute pression (type S38XHS de 3M France) et les éléments supérieurs seront avantageusement réalisées en utilisant des microsphères basse pression (type K20 de 3M France), les éléments intermédiaires étant avantageusement réalisées en utilisant des microsphères de pression intermédiaire disponibles chez ce même fournisseur. On optimise ainsi le coût de la flottabilité requise pour une telle installation.

### Exemple 8 :

De préférence, l'enveloppe 10 et 17 des exemples 4 et 5 est réalisée en rotomoulage ou en extrusion, de manière à minimiser les raccordements par soudage, par collage ou par assemblage mécanique, ces méthodes étant source de fuite, donc de pollution du milieu ambiant par migration du kérosène. A cet effet, on utilise de préférence des matériaux thermoplastiques limitant la migration par percolation du composé plastifiant et plus particulièrement du kérosène, par exemple du polyamide (PA) ou du PVDF, ce dernier étant particulièrement bien adapté à la réalisation desdites enveloppes.

Dans le cas de rotomoulage avec un polyamide ou un PVDF, en raison du coût élevé de la matière première, on réalise de préférence un rotomoulage en deux temps, mais de manière continue. Dans un premier temps, on rotomoule l'enveloppe avec du polyéthylène (PE) ou du polypropylène (PP), de manière à former la paroi résistante de l'enveloppe (75 à 90% de l'épaisseur de ladite paroi), puis, une fois la paroi en PE/PP entièrement fondue et collant à la paroi du moule, on introduit alors la deuxième charge de PA/PVDF et on poursuit le rotomoulage jusqu'à ce que la paroi soit entièrement constituée d'un bicouche présentant de l'extérieur vers l'intérieur : - une première couche externe de PE/PP représentant sensiblement de 75 à 90% de l'épaisseur finale, et - une seconde couche interne de PA/PVDF représentant sensiblement de 25 à 10% de l'épaisseur finale. Ainsi, l'enveloppe est réalisée à moindre coût et présente une résistance mécanique optimale (PE/PP) ainsi qu'une barrière limitant, voire supprimant la percolation du composé plastifiant et plus particulièrement du kérosène vers l'extérieur, respectant ainsi le milieu ambiant, c'est à dire le fond marin et sa faune.

### Exemple 9 :

On a décrit ci-dessus l'utilisation de kérosène en tant que composé isolant plastifiant liquide, mais on peut aussi utiliser un carburant plus léger, tel l'essence, car ce dernier présente une densité plus faible de 0,75, un module de compressibilité d'environ 2 100 MPa, donc similaire à celui du kérosène, et une conductivité thermique de 0,07 W/m/K, donc extrêmement faible, ce qui conduit à un composé rigide isolant selon l'invention de performances mécaniques similaires, mais de performances isolantes et de flottabilité grandement améliorées. Par contre, en raison du point éclair de l'essence, ce dernier étant très bas (-43°C), le processus de fabrication est plus dangereux en raison des risques d'explosion et, de ce fait, ne constitue pas la version préférée de l'invention.

## Revendications

1. Matériau d'isolation thermique et/ou de flottabilité rigide **caractérisé en ce qu'**il est constitué d'un mélange de :
- (a) d'une matrice d'un mélange homogène de polymère élastomère réticulé et d'un composé plastifiant isolant liquide, ledit composé plastifiant isolant étant choisi parmi des composés issus d'huile minérale, de préférence des hydrocarbures, et des composés issus d'huiles végétales, de préférence des esters d'huiles végétales, ledit composé plastifiant isolant n'étant pas un matériau de type à changement de phase à une température de -10° à +150°C, la proportion massique de dit composé plastifiant dans ladite matrice étant d'au moins 60%, et
- (b) de billes creuses, de préférence des microbilles de verre, dispersées au sein d'une dite matrice dudit mélange homogène de dit polymère et dit composé plastifiant isolant, dans une proportion volumique de 40 à 65% du volume total du mélange desdites billes avec ladite matrice.

2. Matériau d'isolation thermique et/ou de flottabilité selon la revendication 1, **caractérisé en ce que** ledit composé plastifiant présente un module de compressibilité supérieur à celui dudit polymère et une conductivité thermique, ainsi qu'une densité, inférieures à celle dudit polymère.

3. Matériau d'isolation thermique et/ou de flottabilité selon la revendication 1 ou 2, **caractérisé en ce que** :
- le rapport en masse dudit polymère réticulé et dudit composé plastifiant isolant est de 20/80 à 30/70, et
- le rapport en volume desdites microbilles par rapport au volume de ladite matrice de polymère réticulé et de dit composé isolant est de 40/60 à 60/40.

4. Matériau d'isolation thermique et/ou de flottabilité selon la revendication 3, **caractérisé en ce que** le rapport en volume desdites microbilles par rapport au volume de ladite matrice de polymère réticulé et de dit composé isolant est de 45/55 à 57/43.

5. Matériau d'isolation thermique et/ou de flottabilité selon l'une des revendications 1 à 4, **caractérisé en ce que** ledit polymère réticulé est de type polyuréthane et ledit composé plastifiant liquide est un produit pétrolier, dit de coupe légère du type carburant.

6. Matériau d'isolation thermique et/ou de flottabilité selon l'une des revendications 1 à 5, **caractérisé en ce que** ledit composé plastifiant est choisi parmi le kérosène, gazole, essence et white spirit.

7. Matériau d'isolation thermique et/ou de flottabilité selon l'une des revendications 1 à 6, **caractérisé en ce que** ledit polymère réticulé est un polyuréthane résultant de la réticulation par polyaddition de polydiène hydroxylé, de préférence polybutadiène hydroxylé, et de polyisocyanate aromatique, de préférence le 4,4'-diphényl-méthane diisocyanate (MDI) ou un MDI polymérique.

8. Matériau d'isolation thermique et/ou flottabilité selon l'une des revendications 1 à 7, **caractérisé en ce que** ledit matériau est confiné dans une enveloppe protectrice.

9. Matériau d'isolation thermique et/ou de flottabilité selon l'une des revendications 1 à 8, **caractérisé en ce que** ledit matériau se présente sous forme de pièce prémoulée, de préférence apte à être appliquée autour d'une conduite sous-marine ou un élément de conduite sous-marine pour en assurer l'isolation thermique et/ou la flottabilité et résistant à la pression hydrostatique sous-marine, de préférence à une grande profondeur d'au moins 1 000 m.

10. Matériau d'isolation thermique et/ou de flottabilité selon l'une des revendications 1 à 9, **caractérisé en ce que** lesdites microbilles sont en contact direct les unes contre les autres, lesdites microbilles étant entièrement revêtues sur toutes leurs surfaces externes d'au moins une pellicule de mélange de dite matrice, ledit mélange occupant l'intégralité des interstices entre lesdites microbilles.

11. Matériau d'isolation thermique et/ou flottabilité selon l'une des revendications 1 à 10, **caractérisé en ce que** la flottabilité dudit matériau augmente avec la profondeur d'eau d'immersion.

12. Procédé de préparation d'un matériau selon l'une des revendications 1 à 11, **caractérisé en ce que** l'on réalise les étapes suivantes dans lesquelles :
1/- on mélange ledit composé liquide isolant et les monomères et/ou pré polymère aptes à réagir pour former dudit polymère réticulé, jusqu'à obtenir un mélange homogène, de préférence en tirant au vide pour obtenir un mélange dégazé, et
2/- on mélange un mélange homogène de l'étape 1/- avec desdites billes pour obtenir un mélange homogène, de préférence en tirant au vide, et
3/- ledit mélange de l'étape 2/- est laissé au repos jusqu'à réticulation complète pour former un dit matériau isolant thermique rigide, de préférence étuvé à une température de 18 à 30°C et pendant au moins 24 heures, de préférence encore 24 à 72 heures.

13. Procédé selon la revendication 12, **caractérisé en ce que** à l'étape 3/-, on réalise les étapes successives dans lesquelles :
3a/- on coule ou injecte ledit mélange de l'étape 2/- dans une enveloppe (5a-5b, 10, 17) servant de moule ou dans un espace formé par (a) la surface externe d'un élément de conduite ou conduite sous-marine à isoler et/ou dont on désire augmenter la flottabilité, et (b) la surface intérieure d'une dit enveloppe protectrice, puis
3b/- on laisse ledit mélange au repos dans ladite enveloppe jusqu'à réticulation et solidification complète in situ.

14. Utilisation d'un matériau d'isolation thermique et/ou de flottabilité selon l'une des revendications 1 à 11, pour l'isolation et/ou la flottabilité d'une conduite sous-marine ou élément de conduite sous-marine.

15. Utilisation d'un matériau d'isolation thermique et/ou de flottabilité selon la revendication 14, **caractérisée en ce que** ledit élément de conduite sous-marine est un élément de conduites coaxiales de jonction coudée.

16. Utilisation selon la revendication 14 ou 15, **caractérisée en ce que** ladite conduite véhicule un fluide chaud à une température de 20 à 80°C dans une eau de mer dont la température est inférieure à 20°C, de préférence inférieure à 4°C, de préférence à une grande profondeur d'au moins 1 000 m.

## Patentansprüche

1. Steifes Material zur Wärmeisolierung und/oder zum Auftrieb, **dadurch gekennzeichnet, dass** es aus einem Gemisch ausgebildet ist von:
- (a) einer Matrix eines homogenen Gemischs aus einem vernetzten elastomeren Polymer und einer flüssigen isolierenden Weichmacherverbindung, wobei die isolierende Weichmacherverbindung aus den Verbindungen ausgewählt ist, die aus Mineralöl, vorzugsweise Kohlenwasserstoffen, hervorgegangen sind, und Verbindungen, die aus Pflanzenölen, vorzugsweise Estern von Pflanzenölen, hervorgegangen sind, wobei die isolierende Weichmacherverbindung kein Material vom Typ mit einer Phasenänderung bei einer Temperatur von -10° bis +150 °C ist, wobei der Massenanteil der Weichmacherverbindung in der Matrix mindestens 60 % beträgt, und
- (b) hohlen Kugeln, vorzugsweise Glasmikrokugeln, die in einer Matrix des homogenen Gemischs aus dem Polymer und der isolierenden Weichmacherverbindung in einem Volumenanteil von 40 bis 65 % des Gesamtvolumens des Gemischs der Kugeln mit der Matrix verteilt sind.

2. Material zur Wärmeisolierung und/oder zum Auftrieb nach Anspruch 1, **dadurch gekennzeichnet, dass** die Weichmacherverbindung ein Kompressionsmodul, das größer als das des Polymers ist, und eine thermische Leitfähigkeit sowie eine Dichte, die kleiner als die des Polymers sind, aufweist.

3. Material zur Wärmeisolierung und/oder zum Auftrieb nach Anspruch 1 oder 2, **dadurch gekennzeichnet, dass**:
- das Massenverhältnis des vernetzten Polymers und der isolierenden Weichmacherverbindung von 20/80 bis 30/70 beträgt, und
- das Verhältnis des Volumens der Mikrokugeln in Bezug auf das Volumen der vernetzten Polymermatrix und der isolierenden Verbindung von 40/60 bis 60/40 beträgt.

4. Material zur Wärmeisolierung und/oder zum Auftrieb nach Anspruch 3, **dadurch gekennzeichnet, dass** das Verhältnis des Volumens der Mikrokugeln in Bezug auf das Volumen der vernetzten Polymermatrix und der isolierenden Verbindung von 45/55 bis 57/43 beträgt.

5. Material zur Wärmeisolierung und/oder zum Auftrieb nach einem der Ansprüche 1 bis 4, **dadurch gekennzeichnet, dass** das vernetzte Polymer vom Typ Polyurethan ist und die flüssige Weichmacherverbindung ein Erdölprodukt leichter Fraktion vom Typ Kraftstoff ist.

6. Material zur Wärmeisolierung und/oder zum Auftrieb nach einem der Ansprüche 1 bis 5, **dadurch gekennzeichnet, dass** die Weichmacherverbindung aus Kerosin, Diesel, Benzin und Waschbenzin ausgewählt ist.

7. Material zur Wärmeisolierung und/oder zum Auftrieb nach einem der Ansprüche 1 bis 6, **dadurch gekennzeichnet, dass** das vernetzte Polymer ein Polyurethan, das aus der Vernetzung durch Polyaddition von hydroxyliertem Polydien, vorzugsweise hydroxyliertem Polybutadien, und von aromatischem Polyisocyanat, vorzugsweise 4,4'-Diphenylmethandiisocyanat (MDI), hervorgegangen ist, oder ein polymeres MDI ist.

8. Material zur Wärmeisolierung und/oder zum Auftrieb nach einem der Ansprüche 1 bis 7, **dadurch gekennzeichnet, dass** das Material in eine Schutzhülle eingeschlossen ist.

9. Material zur Wärmeisolierung und/oder zum Auftrieb nach einem der Ansprüche 1 bis 8, **dadurch gekennzeichnet, dass** das Material in Form eines vorgeformten Teils vorliegt, das vorzugsweise imstande ist, um eine unterseeische Leitung oder ein unterseeisches Leitungselement aufgebracht zu werden, um deren/dessen Wärmeisolierung und/oder Auftrieb zu sichern und gegenüber dem unterseeischen hydrostatischen Druck vorzugsweise in einer großen Tiefe von mindestens 1000 m widerstandsfähig ist.

10. Material zur Wärmeisolierung und/oder zum Auftrieb nach einem der Ansprüche 1 bis 9, **dadurch gekennzeichnet, dass** die Mikrokugeln miteinander in direktem Kontakt stehen, wobei die Mikrokugeln auf ihrer gesamten äußeren Oberfläche mit mindestens einer Matrixgemischschicht beschichtet sind, wobei das Gemisch vollständig die Zwischenräume zwischen den Mikrokugeln einnimmt.

11. Material zur Wärmeisolierung und/oder zum Auftrieb nach einem der Ansprüche 1 bis 10, **dadurch gekennzeichnet, dass** der Auftrieb des Materials mit der Eintauchwassertiefe zunimmt.

12. Verfahren zur Herstellung eines Materials nach einem der Ansprüche 1 bis 11, **dadurch gekennzeichnet, dass** die folgenden Schritte durchgeführt werden, bei denen:
1/- die isolierende flüssige Verbindung und die Monomere und/oder Prepolymer, die imstande sind zu reagieren, um das vernetzte Polymer zu bilden, gemischt werden, bis man ein homogenes Gemisch erhält, vorzugsweise im Vakuum, um ein entgastes Gemisch zu erhalten, und
2/- ein homogenes Gemisch von Schritt 1/- mit den Kugeln gemischt wird, um ein homogenes Gemisch zu erhalten, vorzugsweise im Vakuum, und
3/- man das Gemisch von Schritt 2/- bis zur vollständigen Vernetzung ruhen lässt, um ein besagtes steifes Material für Wärmeisolierung zu bilden, vorzugsweise wärmebehandelt bei einer Temperatur von 18 bis 30 °C und während mindestens 24 Stunden, noch vorzugsweiser 24 bis 72 Stunden.

13. Verfahren nach Anspruch 12, **dadurch gekennzeichnet, dass** in Schritt 3/- die aufeinanderfolgenden Schritte durchgeführt werden, bei denen:
3a/- das Gemisch von Schritt 2/- in eine Hülle (5a-5b, 10, 17), die als Form dient, oder in einen Bereich, der von (a) der äußeren Oberfläche eines zu isolierenden unterseeischen Leitungselements oder Leitung und/oder dessen/deren Auftrieb verbessert werden soll, und (b) der inneren Oberfläche einer Schutzhülle gebildet ist, gegossen oder gespritzt wird, dann
3b/- man das Gemisch in der Hülle bis zur Vernetzung und vollständigen Verfestigung in situ ruhen lässt.

14. Verwendung eines Materials für Wärmeisolierung und/oder Auftrieb nach einem der Ansprüche 1 bis 11 für die Isolierung und/oder den Auftrieb einer unterseeischen Leitung oder eines unterseeischen Leitungselements.

15. Verwendung eines Materials für Wärmeisolierung und/oder Auftrieb nach Anspruch 14, **dadurch gekennzeichnet, dass** das unterseeische Leitungselement ein Element koaxialer Leitungen mit Winkelverbindung ist.

16. Verwendung nach Anspruch 14 oder 15, **dadurch gekennzeichnet, dass** die Leitung ein warmes Fluid mit einer Temperatur von 20 bis 80°C in einem Meerwasser, dessen Temperatur unter 20 °C, vorzugsweise unter 4°C beträgt, vorzugsweise in einer großen Tiefe von mindestens 1000 m befördert.

## Claims

1. A rigid thermal insulation and/or buoyancy material **characterized in that** it is constituted by a mixture of:
a) a matrix of a homogeneous mixture of cured elastomer polymer and a liquid insulating plasticizer compound, said insulating plasticizer compound being selected from compounds derived from mineral oil, preferably hydrocarbons, and compounds derived from vegetable oils, preferably esters of vegetable oils, said insulating plasticizer compound not being a material of the type that changes phase at a temperature lying in the range -10°C to +150°C, the mass proportion of said plasticizer compound in said matrix being at least 60%; and
b) hollow beads, preferably glass microbeads, dispersed within a said matrix of said homogeneous mixture of said polymer and said insulating plasticizer compound, at a proportion by volume of 40 to 65% of the total volume of the mixture of said beads with said matrix.

2. A thermal insulation and/or buoyancy material according to claim 1, **characterized in that** said plasticizer compound presents a bulk modulus greater than that of said polymer and thermal conductivity, and also density, that are less than those of said polymer.

3. A thermal insulation and/or buoyancy material according to claim 1 or claim 2, **characterized in that**:
• the mass ratio of said cured polymer and said insulating plasticizer compound lies in the range 20/80 to 30/70; and
• the volume ratio of said microbeads relative to the volume of said matrix of cured polymer and said insulating compound lies in the range 40/60 to 60/40.

4. A thermal insulation and/or buoyancy material according to claim 3, **characterized in that** the volume ratio of said microbeads relative to the volume of said matrix of cured polymer and said insulating compound lies in the range 45/55 to 57/43.

5. A thermal insulation and/or buoyancy material according to any one of claims 1 to 4, **characterized in that** said cured polymer is of the polyurethane type and said liquid plasticizer compound is a petroleum product, known as a fuel type light cup.

6. A thermal insulation and/or buoyancy material according to any one of claims 1 to 5, **characterized in that** said plasticizer compound is selected from kerosene, gasoil, gasoline, and white spirit.

7. A thermal insulation and/or buoyancy material according to any one of claims 1 to 6, **characterized in that** said cured polymer is a polyurethane resulting from polyaddition cross-linking of hydroxylated polydiene, preferably hydroxylated polybutadiene, and of aromatic polyisocyanate, preferably 4,4'-diphenyl-methanediisocyanate (MDI) or a polymeric MDI.

8. A thermal insulation and/or buoyancy material according to any one of claims 1 to 7, **characterized in that** said material is confined in a protective jacket.

9. A thermal insulation and/or buoyancy material according to any one of claims 1 to 8, **characterized in that** said material is in the form of a premolded part, preferably suitable for being applied around an undersea pipe or an undersea pipe element in order to provide thermal insulation and/or buoyancy, and withstanding underwater hydrostatic pressure, preferably at a great depth of at least 1000 m.

10. A thermal insulation and/or buoyancy material according to any one of claims 1 to 9, **characterized in that** said microbeads are in direct contact against one another, said microbeads being coated entirely over their outside surfaces in full in at least a film of the mixture of said matrix, said mixture fully occupying the gaps between said microbeads.

11. A thermal insulation and/or buoyancy material according to any one of claims 1 to 10, **characterized in that** the buioyancy of said material increases with the xater immersion depth.

12. A method of preparing a material according to any one of claims 1 to 11, **characterized in that** the following steps are performed:
1/ mixing said insulating liquid compound and the monomers and/or prepolymers suitable for reacting to form said cured polymer, until a homogeneous mixture is obtained, preferably under a vacuum in order to obtain a degassed mixture;
2/ mixing a homogeneous mixture of step 1/ with said beads in order to obtain a homogeneous mixture, preferably under a vacuum; and
3/ leaving said mixture of step 2/ to rest until completely cured in order to form a said rigid thermally insulating material, preferably with stoving at a temperature in the range 18°C to 30°C for at least 24 h, and more preferably in the range 24 h to 72 h.

13. A method according to claim 12, **characterized in that** in step 3/, the following successive steps are performed:
3a/ casting or injecting said mixture of step 2/ into a jacket (5a-5b, 10, 17) acting as a mold or into a space formed by a) the outside surface of a pipe element or an undersea pipe to be insulated and/or for which it is desired to increase buoyancy, and b) the inside surface of a said protective jacket; and then
3b/ leaving said mixture to rest in said jacket until it has cured and solidified completely in situ.

14. The use of a thermal insulation and/or buoyancy material according to any one of claims 1 to 11, for insulating an undersea pipe or an undersea pipe element, and/or for providing buoyancy thereto.

15. The use of a thermal insulation and/or buoyancy material according to claim 14, **characterized in that** said undersea pipe element is a bent coaxial pipe junction element.

16. The use according to claim 14 or claim 15, **characterized in that** said pipe conveys a hot fluid at a temperature lying in the range 20°C to 80°C in seawater at a temperature of less than 20°C, preferably less than 4°C, and preferably at a great depth of at least 1000 m.
